# EUROPEAN PATENT SPECIFICATION

(11) **EP 2 589 765 B1**
(45) Date of publication and mention of the grant of the patent: **27.07.2016**
(21) Application number: 12188078.5
(22) Date of filing: 11.10.2012
(51) Int. Cl.: F01K 17/04, F22B 1/00, E21B 43/24, F22B 35/16

(54) **Solar plant for enhanced oil recovery**
Solaranlage zur verstärkten Ölrückgewinnung
Installation solaire pour la récupération améliorée du pétrole

(30) Priority: 01.11.2011 NL 2007696
(43) Date of publication of application: 08.05.2013
(73) Proprietor: NEM Energy B.V., 2321 JW Leiden (NL)
(72) Inventor: Rop, Peter Simon, 2723 TR Zoetermeer (NL)
(74) Representative: Maier, Daniel Oliver

(56) References cited:
- WO-A2-2007/033371
- WO-A2-2010/132849
- US-A1- 2005 279 500
- US-A1- 2010 000 733
- US-A1- 2010 200 231

## Description

The present invention relates to a solar plant, in particular a solar enhanced oil recovery plant, and a method for carrying out a tertiary enhanced oil recovery as known from e.g. WO 2010/132849 A2.

Further US 2010/0000733 disclose a method for the recovery of hydrocarbon from oil sands. A solar thermal power plant is used to generate steam. The steam in injected via an injection well into a formation in the ground to extract bitumen at an oil producing well. Fig. 7 of US2010/0000733 shows a solar field which has a first circuit of heat transfer fluid. A heat exchange unit is provided to exchange heat from the heat transfer fluid to a water steam mixture in a second circuit. Herewith, steam is produced in the second circuit which is injected in the injection well into the formation. Returned water from the formation is separated from the extracted oil and recirculated in the second circuit. The first circuit comprises a clean heat transfer fluid, which may be clean water, to prevent scaling of insolation panels. The second circuit comprises a relatively dirty water steam mixture. The returned water includes oil residuals and minerals which would cause scaling of insolation surfaces of a solar field if this water was directly supplied to the solar field. Frequently arranged cleaning operations would be necessary to clean the insolation surfaces. This would decrease an operational time of the solar plant. US-A1-2005/0279500 and US-A1-2010/020023, disclose further enhanced oil recovery techniques.

The disclosed method has several disadvantages. As a result of the heat exchange unit between the first and second circuit, the thermal efficiency of the solar field is low. Thermal losses occur due to the transfer of heat via a heat transfer medium to the water steam mixture. Another drawback of the implemented heat exchange unit is that the heat exchange unit requires a start up time to reach an operational temperature. This start up time shortens the available operational time of the solar field. A further disadvantage is that the implementation of the necessary heat exchange unit requires a serious capital investment.

In general it is an object of the present invention to at least partially eliminate the above mentioned drawbacks and/or to provide a useable alternative. More specific, it is an object of the invention to provide a solar plant and a method for operation of the solar plant, wherein efficiency is increased. In particular, it is an object to reduce a start-up time and increase an available operational time.

According to the invention, this object is achieved by a solar plant according to claim 1.

The solar plant according to the invention is a plant which uses during operation solar energy to generate steam. The solar plant comprises a water steam circuit for conducting a water steam mixture. Downstream the circuit, fed water is heated and evaporated into steam.

The water steam circuit has a steam outlet for discharging steam to an object. In particular the object is a formation, more in particular a ground formation. The ground formation is in particular an oil field and the solar plant is preferably used for thermal enhanced oil recovery.

The water steam circuit further has a water inlet for supplying water, in particular for returning water from the object into the water steam circuit. Herewith, water may be recycled into the water steam circuit.

The water steam circuit comprises a solar heat system for heating the water steam mixture in the water steam circuit. In operation, the solar heat system uses solar energy to heat up water in the water steam circuit.

The solar heat system has a heat system inlet which is in fluid communication with the water inlet of the circuit for receiving water from the water inlet and a heat system outlet which is in fluid communication with the steam outlet of the circuit for discharging a water-steam mixture to the steam outlet.

The water steam circuit further comprises a separator for separating water from steam. The separator is arranged downstream from the solar heat system. The separator has a water-steam inlet which is in fluid communication with the heat system outlet for receiving the water-steam mixture from the solar heat system. The separator has a separator steam outlet which is in fluid communication with the steam outlet of the circuit and a separator water outlet which is via a recirculation conduit in fluid communication with the solar heat system inlet. In particular, the water steam circuit is a single circuit, wherein water from the water inlet is directly fed through the solar heat system. The water may be conducted through a heat exchange panel of the solar heat system, wherein the water is directly heated by insolation. The solar plant has no first and second subcircuits which are coupled by a heat exchange unit to prevent returned water to flow through the heat system.

The recirculation conduit provides a major advantage. In comparison with a circuit without the recirculation conduit, advantageously, the mass flow rate of water through the heat system is increased. The increased water flow reduces the risk of scaling of the heat system. The solar heat system is of a circulating type in stead of a once through type. Water circulates through the solar heat system and generated steam is separated from the water and discharged via the steam outlet by the separator.

The recirculation conduit conducts separated water from the separator to the heat system inlet. The separated water from the separator is fed to the heat system together with water originating from the water inlet of the water steam circuit. The water inlet of the circuit is a first water source and the separator water outlet is a second water source for the solar heat system. Advantageously, the controllability of the water quality fed to the heat system is improved by feeding the solar heat system from two water sources. A total mass flow of water which is fed to the solar heat system originates from the two water sources, in which the ratio between a first mass flow of water from the first water source and a second mass flow of water from the second water source is controllable. In case that a contamination is detected in the first mass flow it is possible to reduce the first mass flow to prevent damage to the solar heat system.

Further the solar plant comprises a water purification facility which is provided at the water inlet for cleaning water, in particular returned water from the object and for feeding cleaned water to the water steam circuit, and a preheater for preheating the fed water. The preheater is positioned upstream the solar heat system. The preheater may have a preheater outlet which is in fluid communication with the solar heat system and a preheater inlet which is in fluid communication with the purification facility. Advantageously, the efficiency of the solar plant may be further increased by the implementation of the preheater.

In an embodiment of the solar plant according to the invention, returned water from the object is recycled in the steam water circuit. In dry regions like desserts the availability of sunlight is high, but the availability of water is low. For that reason, it is advantageous to install the solar plant at such regions and to recycle the water.

In an embodiment, monitoring and control means are provided to control the mass flow rate from the separator water outlet and/or the mass flow rate of water originating from the water inlet. If it is monitored that the water flow from the water inlet of the circuit is contaminated above an admissible level, it is possible to control the concentration of contaminations in the water flow to the solar heat system by controlling the ratio of fed water from the recirculation conduct with respect to the fed water originating from the water inlet. In particular, the separator may serve as a water buffer for compensating variations is mass flow. Herewith, the solar heat system can be protected against a too high level of contaminations in the water which pass the solar heat system.

In an embodiment of the solar plant, the solar plant is implemented in an industrial plant e.g. a refinery for metals, salt, sugar, oil, gas etc. The invention further relates to an industrial plant comprising a solar plant according to claim 1.

The solar plant is in particular a solar enhanced oil recovery (EOR) plant. The solar EOR plant comprises a steam injection well for injecting steam into an oil field and an oil well for receiving oil from the oil field. The steam outlet of the circuit is connected to the steam injection well and the water inlet of the circuit is connected to the oil well. The steam outlet may be connected to a steam injection well. The steam outlet may be arranged for injecting steam into the formation. The water inlet may be connected to a water-oil separator for separating water from oil originating from the oil field. Water is separated from yielded oil and returned back into the water steam circuit.

In an embodiment of the solar heat system of the solar power plant according to the invention, incident radiation may be used to heat up a heat exchange tube of the solar heat system. The heat exchange tube conducts the water steam mixture and is part of the water steam circuit. Herewith, the incident sunlight directly heats up the water steam mixture. No further heat transfer to another circuit by heat exchangers is necessary to obtain the steam which is discharged through the steam outlet. Thermal losses caused by heat exchange units are prevented. Due to the direct heat of water in the circuit which takes place in one step, a higher efficiency of the solar plant may be achieved. The start up time of the solar plant is decreased and thus the available operational time of the solar plant is increased. Additionally, the capital investment to implement the solar plant is reduced.

In an embodiment of the solar plant according to the invention, the solar plant comprises a water purification facility which is provided at the water inlet for cleaning water, in particular returned water from the object and for feeding cleaned water to the water steam circuit. In an embodiment, the water purification facility has a water buffer for storing water originating from the object. Returned water is first purified before it is stored in the water buffer. The water buffer is in fluid communication connected to the water inlet of the water steam circuit. Water is fed from the water buffer to the water steam circuit. Advantageously, the water buffer serves as a back up facility for cleaned water. If a contamination of returned water is above an admissible level, the water buffer provides a reduction of the concentration of the contamination. Additionally, the water buffer provides a delay time before the contaminated water enters the water steam circuit. During the delay time, an operator has an opportunity to repair a malfunction of the purification facility. Additionally, the implementation of the water buffer only requires a limited capital investment to obtain a purification facility which complies to higher purification requirements.

In an embodiment of the solar plant according to the invention, the water purification facility has a monitoring means to detect an inadmissible contamination of water, in particular of supplied water to the water buffer. In particular, the monitoring means are real time monitoring means which are on line connectable to a control unit. Advantageously, a failure of the water purification facility is detected earlier. The earlier detection of the failure limits the amount of contaminated water flowing into the water steam circuit. Advantageously, less contaminated water flows into the solar heat system, which will reduce its contamination.

In an embodiment of the solar plant according to the invention, the water purification facility has a purification device including a drain outlet to drain contaminated water away from the water buffer. Advantageously, contaminated returned water can be drained away before it is entered into the water buffer. The water buffer may have shut off means e.g. a stop valve to close a passage from the purification device to the water buffer.

In an embodiment of the solar plant according to the invention, the solar plant comprises a preheater for preheating fed water. The preheater is positioned upstream the solar heat system. The preheater may have a preheater outlet which is in fluid communication with the solar heat system and a preheater inlet which is in fluid communication with the purification facility. The separator of the solar plant may have a blowdown conduit for discharging contaminated water. Discharged water from the separator has a relatively high temperature. The blowdown conduit may be connected to the preheater to transfer residual heat from the separator via the blowdown conduit to the preheater. Advantageously, the efficiency of the solar plant may be further increased by the implementation of the preheater.

In an embodiment, the solar heat system is point focussing system. In the point focussing system sunlight is reflected to a point. The point focussing system comprises a field of heliostats for reflecting solar radiation and a solar tower for receiving reflected solar radiation from the heliostats. The solar heat system comprises an evaporator and a solar tower, wherein the evaporator is mounted on the solar tower. The evaporator comprises a receiver panel for receiving incident solar radiation. The receiver panel includes at least one set of heat transfer tubes. The separator of the solar plant may also be mounted on the solar tower. The heat transfer tubes are oriented in upwards, in particular vertical, direction. Advantageously, the upwards directed heat transfer tubes are less susceptible to malfunction and disturbances caused by rising steam. The heat transfer tubes of a solar panel are in fluid communication connected to each other by a header. The solar panel has at least one connector for a chemical cleaning of the inside of the solar panel for removing particles due to scaling. Chemical cleaning is a cleaning process wherein heat exchange tubes are flushed with a chemical solution. In chemical cleaning a cleaning agent is used to clean the heat exchange tubes. In particular, chemical cleaning is acid-cleaning. Minerals and silicates solve into the solution and are removed from the metal surfaces of the heat exchange tubes. The connectors may be permanent connectors which are permanently available at the solar panel. Advantageously, the possibility to clean in a chemical way in stead of in a commonly known mechanical way including a launching of a pig results in a more simplified configuration of the solar panel.

In an embodiment of the solar plant according to the invention, the solar heat system is a point focusing system comprising a field of heliostats and a solar tower for receiving reflected solar rays from the heliostats, wherein the solar tower has an evaporator comprising at least one solar heat exchange panel to receive incident solar radiation to evaporate fed water. The separator is designed to allow high thermal loads to about 600kW/m². The evaporator is of a circulating type, such that supplied water passes several times through the evaporator. Hence, in stead of a once through type evaporator, the evaporator is of a circulating type. The evaporator comprises an evaporator separator which is in fluid communication connected to at least one evaporator panel, wherein an evaporator separator water outlet is connected to a supply conduit of the at least one evaporator panel. Advantageously, the circulation provides less thermal load and reduces a risk of scaling.

Further the invention relates to a method in accordance with claim 8. The method according to the invention is a method for generating steam, in particular for carrying out a tertiary Enhanced Oil Recovery (EOR) comprising the steps of providing a solar plant according to the invention and operating the solar plant.

The provided solar plant according to the invention is defined by claim 1 as described above. In the method according to the invention a ratio between a mass flow rate of supplied water to the solar heat system originating from the separator which is fed by the recirculation conduit and a mass flow rate of supplied water originating from the water inlet of the circuit is at least a factor five. A ratio of a factor five provides already a positive effect in that the solar heat system gets less contaminated. In particular the ratio of mass flow rates is at least a factor 5, more in particular at least a factor 8 and preferably at least a factor 10. A negative effect of contaminations in the supplied water from the water inlet on the evaporator of the solar heat system is reduced. Contaminations of the supplied water from the water inlet may e.g. be minerals which tend to stick and cook to the inside of the evaporator. This form of contamination is known as scaling. Due to an enlarged mass flow rate through the evaporator, the evaporator of the solar heat system is less susceptible to get contaminated.

In an embodiment of the method according to the invention generated steam is fed to and object and water is extracted from the object to return the obtained water in the solar plant. Water is recycled which is advantageous in dry regions.

In an embodiment of the method according to the invention, purified water at the water inlet of the water steam circuit is stored in a water buffer of the purification facility or separator before supplying the water to the circuit. The storage of purified water provides a delay time before the water enters the water steam circuit of the solar plant. The delay time can be used by an operator to repair a malfunction of the water purification facility.

In an embodiment of the method according to the invention the amount of contamination of water of the purification facility is monitored on line and real time. In particular, the quality of water which is supplied to the water buffer is monitored. Herewith a timely alert is generated in case and that supplied water contains too much contaminations. In case there's a supply of contaminated water is detected by the monitoring means, the method according to the invention may comprise a step wherein the water buffer is shut off from an outlet of a purification device of the purification facility. The water buffer may remain open to the water steam circuit, such that the water steam circuit is still fed by the water buffer.

During the lifetime of the solar plant, the solar heat system needs to be cleaned. Contaminations like minerals in the supplied water may have caused scaling of the evaporator. In an embodiment of the method according to the invention, the method comprises a step, wherein a chemical cleaning is used to clean the evaporator of the solar heat system. In particular, the chemical cleaning is acid-cleaning. A suitable solution including chemical ingredients is flushed through the evaporator to solve cooked minerals and silicates and remove them from the evaporator.

Advantageously, by using a chemical cleaning process, the configuration of the evaporator may be relative simple in comparison with a mechanical cleaning in which a launch station and receiving station for a pig is necessary.

Further, the invention relates to a use of the solar plant according to the invention for thermally enhanced oil recovery, in accordance with claim 14. The provided solar plant according to the invention is defined by claim 1 as described above. In such use the steam outlet is in fluid communication connected to a ground formation via a steam injection well for injecting steam into the formation. The water inlet is preferably arranged for returning water from the ground formation into the water steam circuit.

Further preferred embodiments are defined in the subclaims.

The invention will be explained in more detail with reference to the appended drawings. The drawings show a practical embodiment according to the invention, which may not be interpreted as limiting the scope of the invention. Specific features may also be considered apart from the shown embodiment and may be taken into account in a broader context as a delimiting feature, not only for the shown embodiment but as a common feature for all embodiments falling within the scope of the appended claims, in which:
Fig. 1 shows a schematic view of a solar plant known from state of the art; and
Fig. 2 shows a schematic view of an embodiment of a solar plant according to the invention.

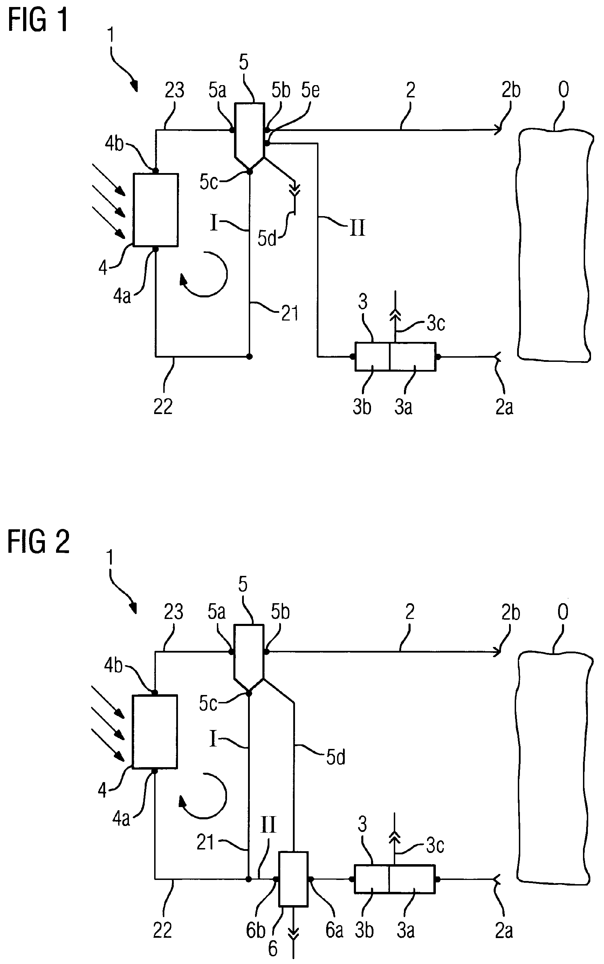

Figure 1 shows in a schematic view a solar plant 1 as known in a similar way from e.g. WO 2010/132849. The solar plant 1 is a plant which uses solar energy to generate steam. The solar plant 1 comprises a circuit 2. The circuit 2 is a single continuous circuit for conducting a water steam mixture from and to an oil field. The circuit 2 has a water inlet 2a for feeding water to the circuit 2 and a water outlet 2b for discharging steam to an object. In this case, the object is an oilfield. Steam is discharged to the oilfield and water is gained from the oilfield. The water at the water inlet 2a originates from the oil field 'O' and is recycled in the circuit 2. The water is cleaned from yielded oil by an oil-water separator and supplied to the circuit 2.

At the water inlet 2a, the water from the oil field 'O' is supplied to a water purification facility 3. The water purification facility 3 comprises a purification device 3a and a water buffer 3b. In the water purification facility 3, the water is cleaned by the purification device 3a from contaminations like minerals and oil residuals. The cleaned water from the purification device 3a is buffered in the water buffer 3b before it is further conducted in the circuit 2 and supplied to a solar heat system 4.

The water buffer 3b has a storage space, a water buffer inlet for supplying water to the storage space and a water buffer outlet for discharging water from the storage space. The water buffer is provided with monitoring means to monitor the quality of the supplied water. The monitoring means are online connected to a control unit and are arranged to measure real-time the quality of the supplied water. The water buffer inlet has a stop valve to shut off the water inlet in case that the supplied water has a too high degree of contamination as a result of a malfunction of the purification device 3a. The contaminated water can be drained away by a drain conduct 3c to leave the circuit 2 or returned to the inlet of the purification device 3a.

During the malfunction, the water steam circuit can still be fed with clean water from the water buffer 3b which allows the solar plant to remain in operation. In the meantime, an operator has an opportunity to repair the malfunction of the purification device. Due to the available water buffer 3b in the water purification facility 3 of the solar plant, it is possible to operate the solar plant with a higher degree of clean water over a long time. By preventing in such a manner incidental contamination of the water steam mixture, the amount of cleaning operations can be reduced and scaling of evaporators can be prevented.

The circuit 2 has a circulating part which is indicated by an arrow. The circulating part comprises the solar heat system 4 and a separator 5.The solar heat system 4 is a heat system in which solar radiation is used to heat up a supplied flow medium. Here, the flow medium is a water steam mixture.

The solar heat system 4 may be a solar field which comprises a field of mirrors, so called heliostats, and a solar tower. Sunlight is reflected by the heliostats and focused to one point on the solar tower. The solar tower comprises an evaporator which comprises at least one receiver panel to evaporate supplied water into steam. The receiver panel of the solar tower may have a heat capacity of about 600 kW/m2. The receiver panel comprises a set of upwardly directed heat transfer tubes. A water steam mixture leaves the evaporator of the solar heat system 4 via a heat system outlet 4b and is conducted to the separator 5.

The separator 5 is arranged to separate water from steam in the supplied water steam mixture. The separator has a water steam inlet 5a which is in fluid communication with the heat system outlet 4b for receiving the water steam mixture from the solar heat system. The separator 5 has a separator steam outlet 5b which is in fluid communication with a steam outlet 2b of the circuit 2. Via the steam outlet 2b, the steam is injected in the oil field 'O'. The separator 5 further has a blowdown conduit 5d for draining flow medium to a water dump.

The separator 5 has a separator water outlet 5c for discharging separated water. The separator water outlet 5c is connected to a recirculation conduit 21. The recirculation conduit 21 is via an extension conduit 22 in fluid communication with the heat system inlet 4a and returns the separated water back to the solar heat system 4. Thus, the heat system is fed with water which originates from the separator 5, which is a first waterflow I, and from the water buffer 3b, which is a second waterflow II. Due to the present circulating part of the circuit, the solar heat system 4 is of a circulating type in stead of a once through type. The solar heat system is of a single pass type in stead of a multi pass type, which means that the flow medium passes during a passage through the evaporator of the solar heat system in a single step through the heat source. The water circulates through the solar heat system until the water is converted into steam. The mass flow rate of water I originating from the separator 5 is higher than the mass flow rate of water II originating from the water buffer 3b of the purification facility. In particular, the mass flow rate of water I originating from the separator 5 is a factor ten times higher than the mass flow rate of water II originating from the water buffer 3b. The large mass flow of water through the solar heat system advantageously prevents scaling of the evaporator.

Figure 1 and 2 show two alternative fluid connections of the water inlet 2a to the solar heat system 4. In Fig. 1, the water inlet 2a is indirectly in fluid communication with the solar heat system 4 via a separator 5 and in Fig. 2, the water inlet 2a is directly in fluid communication with the solar heat system 4.

As shown in Fig. 1, the water buffer 3b is integrated with the water purification facility 3. Water from the water buffer 3b is supplied to a circulating part (21,22,23) of the circuit 2 via a separator 5 via an auxiliary separator inlet 5e. The circulating part of the circuit 2 is formed by the recirculation conduit 21 and an extension conduit 22 connected to the solar heat system and an intermediate conduit 23 forming a connection from the solar heat system 4 to the separator 5. The recirculation and extension conduit 21, 22 may be arranged as a single conduit 21,22 which extends from the separator 5 to the solar heat system. The water which is supplied via the auxiliary separator inlet 5e mixes with a volume of water in the separator 5 before the water volume is conducted through the circulating part of circuit 2. Advantageously, the mixing compensates at least partially a thermal difference between supplied water and present water in the circuit.

As shown in Fig. 1, the water buffer 3b is integrated with the water purification facility 3. Advantageously, contaminated water in the water buffer may be drained away before the water enters the circuit. Alternatively, the water buffer 3b may be integrated with the separator 5 which allows a more simple configuration of the solar plant. In a further alternative embodiment, the water buffer 3b may be provided as a stand alone unit.

In Fig. 2, water from the water buffer outlet 3b of the water purification facility 3 is directly conducted to a solar heat system 4. The water passes a preheater 6 before entering the solar heat system via a heat system inlet 4a. The preheater 6 is arranged for preheating fed water. The preheater 6 is positioned upstream the solar heat system 4. The preheater 6 has a preheater inlet 6a which is in fluid communication with the purification facility and a preheater outlet 6b which is in fluid communication with the solar heat system. The separator 5 of the solar plant 1 has a discharging conduit for discharging flow medium, in particular a blowdown conduit 5d for discharging contaminated or redundant water. Alternatively, the discharging conduit is the recirculation conduit 21. Discharged water from the separator has a relatively high temperature. The discharging conduit 5d is thermally connected to the preheater to transfer residual heat from the separator 5 to the preheater 6. Advantageously, the fed water from the water inlet 2a is preheated, thermal disturbances are reduced and the efficiency of the solar plant is increased.

Although the invention has been disclosed with reference to the particular embodiment in Fig. 2, from reading this description those of skilled in the art may appreciate changes and modifications that may be possible from a technical point of view. It will be understood by those of skilled in the art that various changes may be made and equivalents may be substituted for elements thereof without departing from the scope of the invention as defined by the appended claims. Modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

Thus, the invention provides a solar plant and method for operation which provides a high efficiency and provides a simple configuration to carry out a tertiary enhanced oil recovery.

## Claims

1. Solar plant (1) in which during operation solar energy is used to generate steam, wherein the solar plant (1) comprises a circuit (2) for conducting a water steam mixture, wherein the circuit (2) has a steam outlet (2b) for discharging steam to an object, in particular for injecting steam into an oil field (O), and a water inlet (2a) for supplying water into the circuit, such that water is fed in the circuit (2)
,wherein the solar plant (1) comprises a solar heat system (4) for heating the water steam mixture in the circuit (2), wherein the solar heat system (4) has a heat system inlet (4a) which is in fluid communication with the water inlet (2a) of the circuit (2) for receiving water from the water inlet (2a) and a heat system outlet (4b) which is in fluid communication with the steam outlet (2b) of the circuit for discharging the water steam mixture to the steam outlet
, wherein the solar plant (1) comprises a separator (5) for separating water from steam, wherein the separator (5) is arranged downstream from the solar heat system (4), wherein the separator (5) has a separator water steam inlet (5a) which is in fluid communication with the heat system outlet (4b) for receiving the water steam mixture from the solar heat system (4), a separator steam outlet (5b) which is in fluid communication with the steam outlet (2b) of the circuit (2) and a separator water outlet (5c) which is via a recirculation conduit (21) in fluid communication with the solar heat system inlet (4a)
**characterized in that**
- a water purification facility (3) is provided at the water inlet (2a) for cleaning returned water from the object and for feeding cleaned water into the circuit (2),
- a preheater (6) for preheating fed water is positioned upstream the solar heat system (4), which preheater (6) has a preheater inlet (6a) which is in fluid communication with the water purification facility (3) and a preheater outlet (6b) which is in fluid communication with the solar heat system (4),
and wherein the separator (5) has a discharging conduit (5d) for discharging water, which discharging conduit (5d) is connected to the preheater (6) to transfer residual heat from the separator (5) via the discharging conduit to the preheater (6).

2. Solar plant according to claim 1, wherein the solar plant is a solar enhanced oil recovery (EOR) plant comprising at least one steam injection well for injecting steam into an oilfield (O) and an at least one oil well for receiving oil from the oilfield.

3. Solar plant according to claim 1, wherein a water buffer (3b) is provided for storing purified water originating from the formation.

4. Solar plant according to any of the claims 2-3, wherein the water purification facility (3) has a monitoring means to detect an inadmissible contamination of water.

5. Solar plant according to claim 4, wherein the monitoring means are real time monitoring means which are on line connectable to a control unit.

6. Solar plant according to any of the preceding claims, wherein the water purification facility (3) has a purification device (3a) including a drain outlet (3c) to drain contaminated water.

7. Solar plant according to any of the preceding claims, wherein the solar heat system (4) is a point focusing system comprising a field of heliostats and a solar tower for receiving reflected sunlight from the heliostats, wherein the solar tower has an evaporator comprising at least one solar heat exchange panel to receive incident solar rays to evaporate fed water, wherein the evaporator is of a single pass type, such that supplied water passes in one step through the reflected sunlight during a passage through the evaporator.

8. Method for generating steam by solar energy in particular for carrying out a tertiary Enhanced Oil Recovery (EOR), comprising the steps of providing a solar plant (1) according to any of the claims 1-7 and operating the solar plant (1), wherein a ratio between a mass flow rate of supplied water (I) to the solar heat system (4) originating from the separator (5) which is fed by the recirculation conduit (21) and a mass flow rate of supplied water (II) originating from the water inlet (2a) of the circuit is at least a factor 5, in particular a factor 8, more in particular a factor 10.

9. Method according to claim 8, wherein generated steam is fed to an object (O) and water is extracted from the object (O) to return the obtained water in the solar plant (1) such that water is recycled.

10. Method according to claim 8 or 9 , wherein purified water at the water inlet (2a) of the circuit (2) is stored in a water buffer (3b) before conducting the water into the circuit (2).

11. Method according to claim 10, wherein the amount of contamination of water supplied to the water buffer is monitored on line and real time.

12. Method according to any of the claims 8-11 , wherein the water buffer (3b) is shut off from an outlet of a purification device (3a) of the purification facility (3) in case that a supply of contaminated water is detected by the monitoring means, wherein the circuit (2) is still fed by the water buffer (3b).

13. Method according to any of the claims 8-12, wherein a chemical cleaning process is used to clean an evaporator of the solar heat system (4).

14. Use of the solar plant according to any of the claims 1-7 for thermally Enhanced Oil Recovery (EOR), wherein the steam outlet (2b) of the solar plant is in fluid communication connected to a formation for injecting steam into the formation and a water inlet for returning water from the formation into the water steam circuit.

## Patentansprüche

1. Solaranlage (1), in der während des Betriebes Solarenergie verwendet wird, um Dampf zu erzeugen,
wobei die Solaranlage (1) einen Kreis (2) zum Führen eines Wasser-Dampf-Gemisches umfasst,
wobei der Kreis (2) einen Dampfauslass (2b) zum Ablassen von Dampf zu einem Objekt, insbesondere zum Einspritzen von Dampf in ein Ölfeld (0), und einen Wassereinlass (2a) zum Zuführen von Wasser in den Kreis so, dass Wasser in den Kreis (2) eingespeist wird, besitzt,
wobei die Solaranlage (1) ein Solarwärmesystem (4) zum Erwärmen des Wasser-Dampf-Gemisches in dem Kreis (2) umfasst, wobei das Solarwärmesystem (4) einen Wärmesystemeinlass (4a), der in Fluidkommunikation mit dem Wassereinlass (2a) des Kreises (2) zum Empfangen von Wasser von dem Wassereinlass (2a) ist, und einen Wärmesystemauslass (4b), der in Fluidkommunikation mit dem Dampfauslass (2b) des Kreises zum Ablassen des Wasser-Dampf-Gemisches zu dem Dampfauslass ist, besitzt,
wobei die Solaranlage (1) eine Abscheidungsvorrichtung (5) zum Abscheiden von Wasser von Dampf umfasst,
wobei die Abscheidungsvorrichtung (5) stromabwärts des Solarwärmesystems (4) angeordnet ist, wobei die Abscheidungsvorrichtung (5) einen Abscheidungsvorrichtungs-Wasser-Dampf-Einlass (5a), der in Fluidkommunikation mit dem Wärmesystemauslass (4b) zum Empfangen der Wasser-DampfMischung von dem Solarwärmesystem (4) ist, einen Abscheidungsvorrichtungs-Dampfauslass (5b), der in Fluidkommunikation mit dem Dampfauslass (2b) des Kreises (2) ist, und einen Abscheidungsvorrichtungs-Wasserauslass (5c), der über eine Wiederumwälzungsleitung (21) in Fluidkommunikation mit dem Solarwärmesystemeinlass (4a) ist, besitzt,
**dadurch gekennzeichnet, dass**
- eine Wasserreinigungsanlage (3) zum Reinigen von zurückgeleitetem Wasser von dem Objekt und zum Einspeisen von gereinigtem Wasser in den Kreis (2) bei dem Wassereinlass (2a) vorgesehen ist,
- ein Vorwärmer (6) zum Vorwärmen von eingespeistem Wasser stromaufwärts des Solarwärmesystems (4) positioniert ist, wobei der Vorwärmer (6) einen Vorwärmereinlass (6a), der in Fluidkommunikation mit der Wasserreinigungsanlage (3) ist, und einen Vorwärmerauslass (6b), der in Fluidkommunikation mit dem Solarwärmesystem (4) ist, besitzt
und wobei die Abscheidungsvorrichtung (5) eine Ablassleitung (5d) zum Ablassen von Wasser besitzt, wobei die Ablassleitung (5d) mit dem Vorwärmer (6) verbunden ist, um Restwärme von der Abscheidungsvorrichtung (5) über die Ablassleitung an den Vorwärmer (6) zu übertragen.

2. Solaranlage nach Anspruch 1, wobei die Solaranlage eine solar unterstützte Ölförderanlage (EOR-Anlage) ist, die mindestens eine Dampfeinspritzungsbohrung zum Einspritzen von Dampf in ein Ölfeld (0) und mindestens eine Ölbohrung zum Empfangen von Öl von dem Ölfeld umfasst.

3. Solaranlage nach Anspruch 1, wobei ein Wasserpuffer (3b) zum Speichern von gereinigtem Wasser, das aus der Formation stammt, vorgesehen ist.

4. Solaranlage nach einem der Ansprüche 2-3, wobei die Wasserreinigungsanlage (3) eine Überwachungsvorrichtung besitzt, um eine unzulässige Verunreinigung des Wassers zu detektieren.

5. Solaranlage nach Anspruch 4, wobei die Überwachungsvorrichtung eine Echtzeit-Überwachungsvorrichtung ist, die online mit einer Steuereinheit verbunden werden kann.

6. Solaranlage nach einem der vorhergehenden Ansprüche, wobei die Wasserreinigungsanlage (3) eine Reinigungsvorrichtung (3a) besitzt, die einen Abführauslass (3c) enthält, um verunreinigtes Wasser abzuführen.

7. Solaranlage nach einem der vorhergehenden Ansprüche, wobei das Solarwärmesystem (4) ein punktfokussierendes System ist, das ein Feld von Heliostaten und einen Solarturm zum Empfangen von reflektiertem Sonnenlicht von den Heliostaten umfasst, wobei der Solarturm einen Verdampfer besitzt, der mindestens eine Solar-Wärmetauschplatte umfasst, um einfallende Sonnenstrahlen zu empfangen, um eingespeistes Wasser zu verdampfen, wobei der Verdampfer des Typs des einfachen Durchbewegens derart ist, dass sich das zugeführte Wasser in einem Schritt durch des reflektierte Sonnenlicht während eines Durchgangs durch den Verdampfer bewegt.

8. Verfahren zum Erzeugen von Dampf durch Solarenergie, insbesondere zum Ausführen einer tertiären unterstützten Ölförderung (EOR), das die Schritte des Bereitstellens einer Solaranlage (1) gemäß einem der Ansprüche 1-7 und des Betreibens der Solaranlage (1) umfasst, wobei ein Verhältnis zwischen dem Massendurchfluss des zugeführten Wassers (I), das von der Abscheidungsvorrichtung (5), die durch die Wiederumwälzungsleitung (21) gespeist wird, stammt, an das Solarwärmesystem (4) und dem Massendurchfluss des zugeführten Wassers (II), das von dem Wassereinlass (2a) des Kreises stammt, mindestens ein Faktor 5 ist, speziell ein Faktor 8 ist, noch spezieller ein Faktor 10 ist.

9. Verfahren nach Anspruch 8, wobei der erzeugte Dampf zu einem Objekt (0) gespeist wird und Wasser aus dem Objekt (0) extrahiert wird, um das erhaltene Wasser in die Solaranlage (1) so zurückzuleiten, dass das Wasser wieder verwendet wird.

10. Verfahren nach Anspruch 8 oder 9, wobei gereinigtes Wasser bei dem Wassereinlass (2a) des Kreises (2) in einem Wasserpuffer (3b) gespeichert wird, bevor das Wasser in den Kreis (2) geführt wird.

11. Verfahren nach Anspruch 10, wobei die Menge der Verunreinigung des Wassers, das dem Wasserpuffer zugeführt wird, online und in Echtzeit überwacht wird.

12. Verfahren nach einem der Ansprüche 8-11, wobei der Wasserpuffer (3b) von einem Auslass einer Reinigungsvorrichtung (3a) der Reinigungsanlage (3) im Falle, dass eine Zuführung von verunreinigtem Wasser durch die Überwachungsvorrichtung detektiert wird, abgesperrt wird, wobei der Kreis (2) noch immer durch den Wasserpuffer (3b) gespeist wird.

13. Verfahren nach einem der Ansprüche 8-12, wobei ein chemischer Reinigungsvorgang verwendet wird, um einen Verdampfer des Solarwärmesystems (4) zu reinigen.

14. Verwenden der Solaranlage gemäß einem der Ansprüche 1-7 zur thermal unterstützten Ölförderung (EOR), wobei der Dampfauslass (2b) der Solaranlage in Fluidkommunikation mit einer Formation zum Einspritzen von Dampf in die Formation und einem Wassereinlass zum Zurückleiten von Wasser von der Formation in den Wasser-Dampf-Kreis verbunden ist.

## Revendications

1. Installation ( 1 ) solaire, dans laquelle, en fonctionnement, de l'énergie solaire est utilisée pour produire de la vapeur, l'installation ( 1 ) solaire comprenant un circuit ( 2 ) pour conduire un mélange d'eau et de vapeur, le circuit ( 2 ) ayant une sortie ( 2b ) pour de la vapeur pour refouler de la vapeur sur une chose, en particulier pour injecter de la vapeur dans un champ ( O ) de pétrole, et une entrée ( 2a ) pour de l'eau pour alimenter le circuit en eau, de manière à ce que de l'eau soit chargée dans le circuit ( 2 ),
l'installation ( 1 ) solaire comprenant un système ( 4 ) de chauffage solaire pour chauffer le mélange d'eau et de vapeur du circuit ( 2 ), le système ( 4 ) de chauffage solaire ayant une entrée ( 4a ) de système de chauffage, qui est en communication fluidique avec l'entrée ( 2a ) pour de l'eau du circuit ( 2 ), afin de recevoir de l'eau de l'entrée ( 2a ) pour de l'eau, et une sortie ( 4a ) du système de chauffage, qui est en communication fluidique avec la sortie ( 2b ) pour de la vapeur du circuit, afin d'envoyer le mélange d'eau et de vapeur à la sortie pour de la vapeur,
l'installation ( 1 ) solaire comprenant un séparateur ( 5 ) pour séparer de l'eau de la vapeur, le séparateur ( 5 ) étant monté en aval du système ( 4 ) de chauffage solaire, le séparateur ( 5 ) ayant une entrée ( 5a ) de séparateur pour de l'eau et de la vapeur, qui est en communication fluidique avec la sortie ( 4b ) du système de chauffage, afin de recevoir le mélange d'eau et de vapeur du système ( 4 ) de chauffage solaire, une sortie ( 5b ) de séparateur pour de la vapeur, qui est en communication fluidique avec la sortie ( 2b ) pour de la vapeur du circuit ( 2 ), et une sortie ( 5c ) de séparateur pour de l'eau, qui est, par l'intermédiaire d'un conduit ( 21 ) de recirculation, en communication fluidique avec l'entrée ( 4a ) du système de chauffage solaire, **caractérisée en ce que**
- il est prévu un équipement ( 3 ) d'épuration de l'eau à l'entrée ( 2a ) pour de l'eau, afin d'épurer de l'eau retournée de la chose et afin de charger de l'eau épurée dans le circuit ( 2 ),
- un préchauffeur ( 6 ) pour préchauffer l'eau chargée est mis en amont du système ( 4 ) de chauffage solaire, lequel préchauffeur ( 5 ) a une entrée ( 6a ) de préchauffeur, qui est communication fluidique avec l'équipement ( 3 ) d'épuration de l'eau, et une sortie ( 6b ) de préchauffeur, qui est en communication fluidique avec le système ( 4 ) de chauffage solaire,
et dans laquelle le séparateur ( 5 ) a un conduit ( 5d ) de refoulement pour refouler de l'eau, lequel conduit ( 5d ) de refoulement est relié au préchauffeur ( 6 ) pour transférer de la chaleur résiduelle du séparateur ( 5 ) au préchauffeur ( 6 ) par l'intermédiaire du conduit de refoulement.

2. Installation solaire suivant la revendication 1, dans laquelle l'installation solaire est une installation solaire de récupération assistée du pétrole ( EOR ), comprenant au moins un puits d'injection de vapeur pour injecter de la vapeur dans un champ ( O ) de pétrole et au moins un puits de pétrole pour recevoir de l'huile du champ de pétrole.

3. Installation solaire suivant la revendication 1, dans laquelle il est prévu un tampon ( 3b ) d'eau pour emmagasiner de l'eau épurée provenant de la formation.

4. Installation solaire suivant l'une quelconque des revendications 2 à 3, dans laquelle l'équipement ( 3 ) d'épuration de l'eau a un moyen de contrôle pour détecter une pollution inadmissible de l'eau.

5. Installation solaire suivant la revendication 4, dans laquelle les moyens de contrôle sont des moyens de contrôle en temps réel, qui peuvent être connectés en ligne à une unité de commande.

6. Installation solaire suivant l'une quelconque des revendications précédentes, dans laquelle l'équipement ( 3 ) d'épuration de l'eau a un dispositif ( 3a ) d'épuration, comprenant une sortie ( 3c ) de drainage pour drainer de l'eau polluée.

7. Installation solaire suivant l'une quelconque des revendications précédentes, dans laquelle le système ( 4 ) de chauffage solaire est un système de focalisation sur un point, comprenant un champ d'héliostats et une tour solaire pour recevoir de la lumière solaire réfléchie des héliostats, la tour solaire ayant un évaporateur, comprenant au moins un panneau solaire d'échange de chaleur pour recevoir des rayons solaires incidents, afin d'évaporer de l'eau chargée, l'évaporateur étant d'un type à passage unique, de manière à ce que de l'eau chargée passe en un seul stade dans la lumière solaire réfléchie pendant un passage dans l'évaporateur.

8. Procédé de production de vapeur par de l'énergie solaire, en particulier pour effectuer une récupération assistée du pétrole ( EOR ), comprenant les stades dans lesquels on se procure une installation ( 1 ) solaire suivant l'une quelconque des revendications 1 à 7 et on fait fonctionner l'installation ( 1 ) solaire, un rapport entre un débit massique d'eau ( I ) d'alimentation envoyée au système ( 4 ) de chauffage solaire provenant du séparateur ( 5 ), qui est chargée par le conduit ( 21 ) de recirculation, et un débit massique de l'eau ( II ) d'alimentation provenant de l'entrée ( 2a ) pour de l'eau du circuit étant au moins un facteur 5, en particulier un facteur 8, plus particulièrement un facteur 10.

9. Procédé suivant la revendication 8, dans lequel la vapeur produite est chargée sur une chose ( O ) et de l'eau est extraite de la chose ( O ) pour retourner l'eau obtenue à l'installation ( 1 ) solaire, de sorte que de l'eau est recyclée.

10. Procédé suivant la revendication 8 ou 9, dans lequel on emmagasine de l'eau épurée à l'entrée ( 2a ) pour de l'eau du circuit ( 2 ) dans un tampon ( 3 ) d'eau, avant d'envoyer l'eau au circuit ( 2 ).

11. Procédé suivant la revendication 10, dans lequel on contrôle en ligne et en temps réel la pollution de l'eau envoyée au tampon d'eau.

12. Procédé suivant l'une quelconque des revendications 8 à 11, dans lequel on ferme le tampon ( 3b ) d'eau à partir d'une sortie d'un dispositif ( 3a ) d'épuration de l'équipement ( 3 ) d'épuration, dans le cas où une alimentation en eau polluée est détectée par les moyens de contrôle, le circuit ( 2 ) étant toujours alimenté par le tampon ( 3b ) d'eau.

13. Procédé suivant l'une quelconque des revendications 8 à 12, dans lequel on utilise un processus de nettoyage chimique pour nettoyer un évaporateur du système ( 4 ) de chauffage solaire.

14. Utilisation de l'installation solaire suivant l'une quelconque des revendications 1 à 7, pour une récupération assistée thermiquement de pétrole ( EOR ), la sortie ( 2b ) pour de la vapeur de l'installation solaire étant en communication fluidique avec une formation pour injecter de la vapeur dans la formation et avec une entrée d'eau pour retourner de l'eau de la formation dans le circuit d'eau et de vapeur.
